# EUROPEAN PATENT SPECIFICATION

(11) **EP 4 193 439 B1**
(45) Date of publication and mention of the grant of the patent: **28.08.2024**
(21) Application number: 21763121.7
(22) Date of filing: 02.08.2021
(51) Int. Cl.: H02G 3/36

(54) **STRUCTURED CABLING FOR "INTELLIGENT BUILDINGS"**
STRUKTURIERTE VERKABELUNG FÜR "INTELLIGENTE GEBÄUDE"
CÂBLAGE STRUCTURÉ POUR "BÂTIMENTS INTELLIGENTS"

(30) Priority: 04.08.2020 IT 202000019156
(43) Date of publication of application: 14.06.2023
(73) Proprietor: NIR S.R.L., 70124 Bari (IT)
(72) Inventor: DE FECONDO, Diego, 70124 Bari (IT)
(74) Representative: Bruni, Giovanni
(86) International application number: PCT/IB2021/057041
(87) International publication number: WO 2022/029596

(56) References cited:
- WO-A1-91/11044
- FR-A1- 2 793 075
- US-A- 5 964 609

## Description

### Technical field of the Invention

The field of application of the present invention is the structured cabling of buildings, i.e. those design methodologies (associated, in many cases, with the use of specific equipment) which were developed, starting from the end of the 1990s, and gained an increasing importance in the field of building engineering; so much so that the topic has generated, in addition to specific university-level courses, also a considerable amount of standards and technical recommendations produced by the main regulatory bodies around the world.

In particular, the invention taught in this description indicates a structured cabling architecture in step with the needs of the present time, which are no longer comparable, in terms of complexity and nature, with the needs of only four or five years ago; these needs of the present time, actually, do not always find adequate answers in the legislation and in the known art, even the most up-to-date.

### Prior Art

When, in the 90s of the twentieth century, the problem of optimizing the wiring of buildings began to arise, this essentially concerned buildings for office and business use in general, because the increasing computerization of work activities required the connection of a computer and a telephone at each workstation. Furthermore, an increasing number of devices, servers and printers, present in the same building, or even throughout the geographical network, had to be potentially accessible from these workstations.
The wiring problem was essentially associated to two main needs:
a) implementing ordered systems, in order to make their management and maintainability easier, even as the number of workstations increases;
b) implementing systems with intrinsic flexibility, so that the data networks of the buildings could be reconfigured by varying the arrangement and the number
of access points with great freedom.

As can be seen from these first issues, the problem essentially concerned the telecommunication network, in which telephone distribution and data distribution were distinguished. Among the first important decisions that were established, there was the progressive abandonment (even at the standard level) of coaxial cables, probably because they were too bulky, but previously used widely also for data transmission. Coaxial cables today resist only in use for the distribution of television video signals. The latter, however, are not widely distributed throughout the buildings, and this limitation persists up to now.

The problem of flexibility was solved by also focusing on the structures and building characteristics of the premises, so that a large number of buildings used as work environments were built with floating floors or false ceilings; in many cases the cables were passed on visible cable-holder structures.

The power supply networks were not a particularly felt problem, and therefore the structured cabling theories did not systematically face the issue of power supply. In fact, the prevailing problem was that of managing the enormous and growing quantity of cables for telecommunication signals, and having considerable space for the passage of communication cables, the addition of electrical wiring, possibly suitably separated inside dedicated flexible duct was not, in fact, a problem.

On this basis, the structured cabling of the buildings essentially produced methodologies that made it possible to create data networks with relatively orderly architectures. Some hierarchical levels of the network topology were defined, for which, for example, we speak of horizontal cabling, within which bus architectures or ring architectures can be created, and vertical cabling, which interconnects various horizontal cabling, up to talk about "campus wiring" (but, in this case, a uniform jargon is not so widespread), designed to interconnect the wiring of separate buildings but which are located within a limited area.

The technical regulatory bodies produced a considerable number of standards for cables to be used in any type of environment, for connectors, and for various network equipment. In addition to technical performance, the standards have also placed their attention on safety aspects, so in many cases these standards have become real rules to be followed compulsorily, and they were included into framework regulations on safety.

Although the power supply network has also undergone a fair technical evolution, especially in the name of safety (do not forget that the electrical system is one of the most common causes of fire), this continued to evolve on the basis of the old architectures, being able to have sufficient conduits to accommodate considerable quantities of electrical cables. From a theoretical point of view, the distribution of the electrical power supply does not strictly concern the theme of "structured wiring of buildings", even if it draws a great benefit from it for the simple reason that the "structured wiring of buildings" requires the presence of large space for the passage and arrangement of wiring.

Therefore, to date, we are witnessing a proliferation of networks for electrical distribution inside buildings, characterized by the laying of increasing quantities of cables, up to becoming abnormal in particular circumstances. This phenomenon (of very consistent electrical wiring) is also observed in residential environments (typically not affected by classic "structured wiring"), in particular when the building is designed to support the installation of many home automation services. However, even in the presence of large electrical distribution networks, the architectures are essentially those of the 90s of the twentieth century; and precisely for this reason, the quantity of necessary wiring is particularly high, and not optimized.

The coaxial cables that, still today, carry the television signal inside the buildings, arrive in a few points: if then a distribution of the television signal inside the building is needed, this is introduced into special equipment (for example coding devices) and conveyed in the data network.

This is the general scenario that, still today, which is diffused at the state of the art, even if the needs have changed greatly, especially in the last few years.

The first change concerns the increasingly evident need for structured cabling also in residential environments. Looking ahead, the organization of work is also destined to change profoundly, with a progressive increase in remote work, carried out in promiscuity with the living environments. However, it is not the need to obtain one or more workstations, which represents the most important change from point of view of the plant engineering, especially since the problem of the data network to connect a computer to the internet has been overcome (at least for the volumes of traffic needed today in local networks) with wireless coverage according to the standards of the IEEE 802.11 family. Similarly, telephony is also widely distributed by radio.

The really new problem concerns the connection of the so-called "smart objects", which, in addition to requiring to be often installed in not easily predictable points, they require power, often little or very little, but they must, in any case, be fed.

The "smart objects" (you will see better what is meant by "smart object" below), as well as being powered, must normally also be connected to a data network. In most cases they do not require particularly capable connections, they generally exchange a few bits, however, since they can perform tasks essential to the proper functioning of the home, it is advisable that they do not rely on radio communication, which can be easily disturbed even by the external, lending the side, in an all too simple way, to vandalism, or worse.

Another factor of great differentiation, and criticality, which concerns residential environments, is given by the problem of the passage of cables; whetted by the fact that the requirement of installation flexibility is more and more exacerbated in future scenarios.

The new way of living in homes, the search for a qualitative leap in living comfort and the importance of energy efficiency, will be powerful driving factors in the modernization of homes.

While on the one hand the "smart objects" will constantly increase their number, having to be installed and positioned in points that are difficult to foresee with a priori design, on the other hand the structure of the houses, and of the environments in general will not be able to guarantee the necessary flexibility of installation using the methods used in the classic methodologies of "structured cabling" for buildings.

In fact, in most of the buildings interested by this modernization wave there are no (and will not even be obtainable) floating floors or false ceilings, consequently all the spaces for the necessary cables cannot be made available. Furthermore, aesthetic constraints will lead to a very marginal use of cable-holding structures or exposed raceways.

Ultimately, the new scenarios entail the need for new cabling in an increasing number of environments; while it will not be possible to use the known structured cabling methods for the reasons set out above. Furthermore, the new cabling will be characterized by an overturning also in the order of critical priorities: if in the past it was the telecommunication cabling that was critical, and that acted as a flywheel for the definition of methodologies for "structured cabling" of buildings, while the wiring for power was the least of the problems; in the new scenarios it is the electrical wiring that appears the most critical.

The phenomenon that is currently observed is very eloquent: in new homes and in building renovations, kilometers of electrical cables are laid, in an attempt to create systems suitable to meet the needs of new homes, but as far as telecommunication wiring is concerned, just few access points in a few places are arranged, being the devices suited to access telecommunication networks wirelessly.

Such a measure cannot be the long-term solution. In fact, even in the cases where the electrical distribution is extremely developed, it lacks the fundamental requirement which consists in guaranteeing the flexible positioning of "smart objects". In addition, the wireless connection, which is currently widely used to ensure connectivity between all devices that need it, cannot be assumed, in the long term, as the only solution to ensure adequate access to all equipment.

Consider, for example, the management of the lighting comfort made possible by LED lighting technologies, in which we move from lighting based on a few "light points" to diffused lighting emitted by a large number of small light sources, which must be movable when only some furniture is changed, and which must be able to be adjusted and controlled according to information available through special sensors.

Current cabling methodologies are inadequate to support future scenarios, however the change is already underway and is pressing for success. This ongoing change, on the one hand, bears the inefficiencies and costs of current wiring architectures, on the other hand it is however hampered by the impossibility of introducing all the technology into homes that it would be appropriate, and convenient, to introduce.

The infrastructural criticality, which slows down the affirmation of the new scenarios is only partially understood, also at the institutional level, so that large projects to upgrade network infrastructures (both telecom and electricity) are activated all over the world, and the modernization of buildings is encouraged, recognizing the importance of this modernization in the perspective of a rapidly changing system economy. However, the cabling architecture has not yet been adequately defined, leaving significant space for the possible affirmation of new de facto standards, as long as these are compatible with current networks: that is, they must not give rise to a technological segmentation of the market linked to "Smart object".

It should be noted that in the context of this description, reference has often been made to future scenarios regarding homes, thinking of the residential segment, however the concepts set out concern all "living environments" intended in the most general way: that is, environments inhabited by people in all senses. Including, therefore, also environments dedicated exclusively to work activities (offices, executive spaces, etc ...) and environments for public use in general (from exhibition areas to shops, etc ...): after all, this is not the right place to deal with analysis about the evolution of the real uses of the buildings.

Therefore, in the following the term "intelligent buildings" will be used, which in the current common jargon is well understood, to refer to all buildings whose operation is strongly supported by a significant number of "smart objects".

A further observation, which must be highlighted, concerns the flexibility in the reconfiguration of the networks.

The classic structured cabling pays great attention to offering the possibility of reconfiguring the communication networks, providing for the presence of the so-called "patch panels" positioned in appropriate points of the environments to be wired. In other words, in a structured cabling there is almost always an easily accessible point where by modifying the connections between pairs of physical ports, through the use of very short cables (of the order of centimeters), it is possible to dissect the network with great flexibility, it is possible to create permanent or semi-permanent dedicated connections, to activate or deactivate connections, etc .... On the electrical side, no real "patch panels" are envisaged, however the systems are increasingly designed in such a way that all the cables coming from switches or from the points of connection for electrical loads arrive in special "junction boxes". In this way, by intervening in correspondence with these "junction boxes", it is possible to make some changes to the configuration of the electrical system. Furthermore, current electrical systems cannot ignore the presence of an electrical panel, which can also be of moderate complexity, and which represents the point where the electrical distribution network can be sectioned, according to a partition that is generally fixed and predetermined. It must be said that this design practice, although very useful also for maintenance, is absolutely inadequate to support the reconfiguration needs that arise in the scenarios of "intelligent buildings" as outlined above: it is unthinkable to provide a direct electrical connection between a few "junction boxes", and every single load point or every single switch.

In particular, the quantity of "junction boxes" that are already being built today, even in the electrical systems of simple apartments of medium technological complexity, as well as their "filling", has already reached a point close to being unmanageable; that is, the interventions that can be done to reconfigure the electrical system, even to a very limited extent, appear cumbersome and inefficient.

As already mentioned, the enabling technologies for the affirmation and diffusion of "smart buildings" are already, at least in large part, available; and the installation problem of "smart objects" begins to be faced too. For example, sticking to the solutions already conceived by those who are proposing the present structured cabling solution, some patent applications already submitted are reported. IT102016000068632 - "Modular LED lighting device" and IT102018000006340 - "LED lighting device", are solutions that offer innovative solutions for particularly comfortable, diffused lighting that can be designed according to the new criteria made possible in the context of "smart buildings".

IT102018000009039 - " Optical fiber cabling and installation method thereof' and IT102019000020717 "Wall mounted box for electrical systems and installation method thereof" are solutions that address the problem of wiring for both communications and power supply, in contexts where it is not advisable to intervene with invasive actions on the walls of the environments to be wired. IT102020000006904 - "Air sanitation system", on the other hand, proposes an apparatus to be installed in an indoor environment to improve the air quality, an apparatus that could fully be counted as a "smart object".

Definitely, both the structured cabling of buildings, as far as telecom cabling is concerned, and the current practice of installing electrical distribution systems, represent, for the many reasons set out above, techniques that are inadequate to support future scenarios, which, in all likelihood, will see the progressive spread of the so-called "intelligent buildings". Probably, the actual persistence of this current practice, and of the associated wiring techniques, has a not negligible weight in slowing down the diffusion of other technologies that are enabling for such scenarios, and that are already potentially available.

### Summary of the Invention

The general purpose of the present invention, therefore, is to indicate an innovative wiring architecture of living environments that meets the needs determined by the emergence of "intelligent buildings". In particular, said innovative wiring architecture must guarantee the following performances:
✔ it must be applicable to all existing buildings, without requiring the creation of spaces to house cable ducts;
✔ it must guarantee, substantially everywhere, data and power distribution both in AC and DC mode;
✔ it must allow the installation and the flexible positioning of "smart objects" (and loads in general) without too invasive interventions from the construction point of view;
✔ it must guarantee safety requirements higher than, or equal to, those envisaged by the relevant regulations in force.

Furthermore, said innovative wiring architecture must allow the creation of systems which, from the point of view of the equipment to be connected, can appear as a traditional network, that is, must support the installation of all types of "smart objects", without placing particular technical constraints on the equipment that may be installed; in order not to introduce excessive technological segmentation on the "smart object" market.

In particular, this innovative wiring architecture will allow the definition of a methodology for the design and implementation of electrical systems and local telecommunication networks sufficiently general to be able to support any possible future evolution of the so-called "intelligent buildings".

It is also important that these evolutions can be supported by minimizing the need for building interventions, and that they can be applied to any type of building, safeguarding the existing building heritage.

Therefore, the present invention must present some expedients aimed at limiting the practical difficulties of installation: difficulties that may arise due to having to intervene on extremely varied buildings, in which particular characteristics relating to the types of walls must not be required, so it is not advisable to provide for the positioning of "junction boxes", numerous and voluminous like those currently in vogue, while maintaining a high reconfigurability of the network: a reconfigurability that must be much higher than the reconfigurability of the systems that are widely used today.

The aims set for this invention are achieved by resorting to an electrical power distribution network architecture, in which there is at least one " conductive ring"; and said " conductive ring" is characterized by the fact that:
✔ it comprises a plurality of parallel conductive cables;
✔ it is accessible to power a plurality of electrical devices in parallel, and said electrical devices can be positioned at any point of said " conductive ring";
✔ it is associated with a data transmission line, suitable for supporting data exchanges with said electrical devices.

Moreover, said at least one " conductive ring" includes at least one "contact electrodes board"
✔ which has at least three "groups of contact electrodes" on its perimeter, and
✔ at least two "groups of contact electrodes" include at least a number of electrodes equal to the number of parallel conductive cables comprised in said " conductive ring", and said two "groups of contact electrodes" are designed to connect, each, with the ends of said parallel conductive cables, so as to close said "conductive ring", and
✔ said "contact electrodes board" is flat and thin, being formed also by a support with electrical insulating properties on which there are tracks of conductive material.

Therefore, said "contact electrodes board" has at least one "contact electrode group" which are not connected to the ends of the parallel conductor cables that make up the "conductive ring" on which said "contact electrodes board " is inserted. This at least one "group of contact electrodes" is therefore available to make contacts with other conductive cables that pertain to the considered "contact electrodes board"; in general, these other conductive cables are used to connect said "conductive ring" to other parts of the electrical system.

In a preferred form of implementation, in order to make these "contact electrodes board" suitable for reconfiguring the contacts with the cables that reach said "contact electrodes board", there are holes on it that pass through the tracks, in appropriate positions; these holes are designed to insert "contact pins" that allow you to change the contacts between the various tracks, and consequently the electrical couplings between the conductive cables connected to the various "contact electrodes".

In particular, in a typical scenario, in which there are a plurality of "conductive rings" in an electrical system, the various "contact electrode groups" present in a generic "contact electrodes board" can be coupled to different "conductive rings" which, therefore, from a topological point of view, intersect at said "contact electrodes board ", appropriately configuring the electrical couplings, for example, through the use of said "contact pins".

Or, one or more " contact electrode groups" present in a generic "contact electrodes board" included in a first "conductive ring" are coupled to conductors that make shunts, to connect a second "conductive ring" that does not intersects said first "conductive ring", or to connect a box that makes these contacts available for a load. In other forms of implementation, said "contact pins" can also be used to connect to said "contact electrodes board" some electronic components that allow for the automation of the contact configurations, without having to move, physically, said "contact pins".

It is observed how the presence of said "contact electrodes boards" (which may be present, in each "conducting ring", even in a number greater than one) confers considerable flexibility in the configuration and sectioning of a complex electrical system, reducing the need to provide junction boxes and complex switchboards, towards which large quantities of cables must converge.

Furthermore, it is observed how, a generic electrical system can be quite complex: it can be composed of numerous "conductive rings", and these can be composed of parallel conductor cables different in number and type, depending on whether a "conductive ring" distributes Ac or DC voltage, single-phase or three-phase, or a combination of different voltages.

However, it should be noted that in a residential type application a ring consisting of four parallel conductor cables appears particularly interesting, wherein two cables bring AC voltage, and two cables bring DC voltage regime. In fact, alongside the AC regime loads, which are still widespread today (for example household appliances), there are more and more DC powered loads (for example, most of the "smart objects").

The main advantage of the present invention is that the architectural feature highlighted above is essential to define an architecture for an electrical distribution network that allows to satisfy all the purposes for which the invention was conceived. Furthermore, on the basis of said essential characteristic, which is purely architectural in nature, further characteristics can be indicated, also of a technological nature, which define in a more complete way the architecture of the power supply distribution network according to the teachings of the present invention. Among these additional characteristics, the following are particularly important:
✔ the use of the so-called "ribbon cables", described in more detail below;
✔ the use of particular components called "contact extraction boxes", again described below more in detail, and also in IT102019000020717 ("Wall mounted box for electrical systems and installation method thereof" - D. De Fecondo - Nov. 2019);

Finally, it is immediately observed that the use of said "contact electrodes boards" also have a further practical advantage, as they facilitate the laying of the conductor rings, when these are not housed in the raceway, but they are " ribbon cables ", allowing easy realignment of parallel conductors laid on walls that are not perfectly flat, or not square, or somehow imprecise in their orientations.

### Brief Description of the Drawings

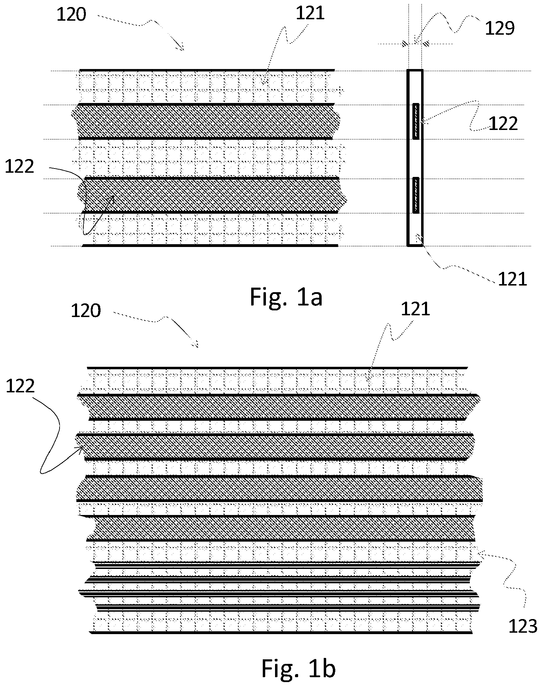

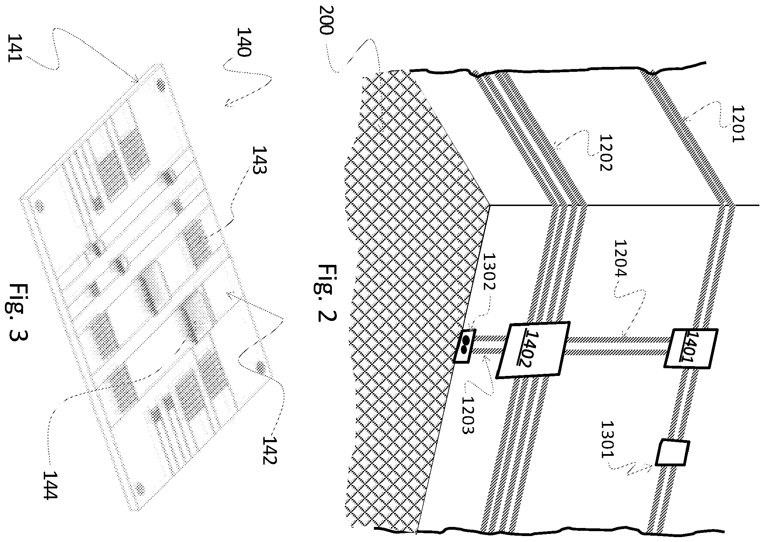

This invention also has further advantages, which will become more evident from the following description, which refers to an example of practical embodiment, which illustrates further details, from the attached claims which form an integral part of the present description, and from the attached figures in which:
✔ Figure 1a schematically shows two orthogonal views of a "ribbon cable" according to the prior art, comprising two electrical conductors;
✔ Figure 1b shows, schematically, a section of another "ribbon cable", of a type suitable for application in the present invention, comprising four electrical conductors and cables dedicated to data transmission;
✔ Figure 2 shows an example of installation of the invention;
✔ Figure 3 shows a "contact electrodes board" according to the invention.

### Detailed Description

As anticipated, the preferred implementation of the present invention benefits greatly from the use of a known, although not very widespread, technology for manufacturing cables: these are the so-called "ribbon cables". These cables appear as flat and thin ribbons, which can be laid between two sheets of plasterboard, or under a panel which in turn is made to adhere to an underlying wall of any type, or even on the surface of masonry walls, and then covered with thin layers of plaster, or special smoothing compound, or other materials for finishing the walls.

Before describing the invention, it is therefore useful to briefly describe how these so-called "ribbon cables", of new conception, are made.

Said "ribbon cable" includes inside a certain number of tapes of conductive material (typically copper). These conductive tapes can be arranged side by side without being in electrical contact with each other, and covered on the two faces by an insulating sheath which, in addition to insulating the conductors, keeps them spaced apart and parallel.

Depending on the needs or uses, "ribbon cables" can be made comprising a variable number of conductive tapes; so that there are "ribbon cables" comprising two, three or any number of conductors (or even fiber optic cables for data, video, etc.). Typically, the insulating sheaths are made adhesive on their external surface in order to facilitate their laying along the desired line paths. These "ribbon cables" do not require ducts, they are attached (thanks to the adhesive face) to the wall, or to the panel, and then covered, typically with an additional finishing panel placed on the wall itself.

It is observed that it is possible to obtain such "ribbon cables" with thicknesses lower than a millimeter, typically from 0.25 to 0.35 mm; in any case, in fact, these are almost negligible thicknesses when compared to the measures that define the typical accuracies of the construction sector.

In the case of plasterboard walls, the typical installation methodology envisages positioning these "ribbon cables" between two coupled sheets of plasterboard; in fact, to give consistency to the wall, double slabs are frequently used, and the so-called "ribbon cables" adapt perfectly to be interposed between the two coupled panels.

In general, it is clear that whenever an internal wall of an environment is finished externally with a panel (or a slab) of any material, which is made to adhere to an underlying wall surface, it is very convenient to lay under this surface finishing panel. a "ribbon cable", thus creating particularly efficient electrical wiring, and practically free of significant bulk.

It should be noted that these wiring do not require ducts or pipes of any kind, and therefore, they are extremely safe, especially from the point of view of the propagation of fires and of the fumes they generate. In other words, the use of this type of wiring has many advantages in terms of fire safety, and allows the creation of fire and/or smoke protection walls without weak parts (such as the pipes prepared for the wiring of the traditional systems). In this regard, it is noted that the "ribbon cable" technology has been tested for resistance to heat (i.e., fire), and has excellent performance: resistance in continuity over two hours at 850 °C, and 73 minutes in destructive test at the reached temperature of 983 °C.

In addition, the absence of pipes inside the walls generally improves all the insulation properties of the walls, both from the sound point of view and from the thermal point of view.

Figure 1a presents, for purely descriptive purposes, two orthogonal views of a piece of "ribbon cable" in its simplest version, and not yet sufficient to fully implement the present invention.

The number 120 indicates the "ribbon cable" as a whole. In the top view (left view) you can appreciate the presence of two conductive tapes indicated with the number 122. The "ribbon cable" 120 represented in Figure 1a is extremely simple as it contains only two conductive tapes 122, which are sufficient for a first description of this type of cables. A "ribbon cable" 120, like the one in the figure, with two conductors, is suitable for carrying a difference in potential both in AC and DC; "ribbon cables" with three conductors allow to carry also the neutral; it is then possible to create "ribbon cables" with four conductors to carry three-phase power supplies, or, at the same time, a line in AC and a line in DC regime. In general, it is possible to propose "ribbon cables" with a further greater number of conductors, in order to accommodate any power supply architecture envisaged in the design phase (for example by distributing both AC and DC, perhaps at different voltages).

The conductive tapes 122 are kept parallel, spaced apart and insulated by a protective sheath, indicated with the number 121.

In the sectional view (on the right side of Figure 1a) it can be appreciated how the two conductive tapes 122 are flat and thin, and how they are contained inside the protective sheath 121. The number 129 indicates the thickness of the " tape "120. Said thickness 129 represents the most interesting dimensional datum of these types of cables. In fact, it is possible to make "ribbon cables" 120 with excellent conductive properties, and excellent insulation, while maintaining thicknesses of the order of one millimeter, and even lower. It is precisely this dimension, so subtle, that allows the creation of non-invasive electrical systems, very suitable for supporting future scenarios, characterized by the need to power a very large number of points inside buildings.

Figure 1b shows a piece of "ribbon cable" of different conformation. Even in Figure 1b the "ribbon cable" as a whole is indicated with the number 120, just as the sheath is always indicated with the number 121 and the conductive tapes with the number 122. Compared to the type shown in Figure 1a it has a greater number of conductors, in this example four, and four further wires, for example optical fibers, indicated with the number 123 and suitable for the transport of communication signals, in general these are lines for data transmission.

Although wider, as it includes more internal conductors, the "ribbon cable" presented in Figure 1b, substantially maintains the same thickness as the simple cable shown in Figure 1.

In addition to the obvious advantage of not requiring the excavation of grooves on the walls to lay the conduits, and the excellent performance in terms of safety, an electrical power distribution system made with "ribbon cables" has another indisputable advantage which consists in the easy extractability of power contacts. In fact, the cable is practically on the surface, and it is therefore easy to reach it to make electrical couplings.

A very significant example, regarding the ease of extraction of electrical contacts from a "ribbon cable", applicable to walls covered with plasterboard panels, or other materials suitable for making cladding (or finishing) panels, is illustrated in IT102019000020717 ("Wall mounted box for electrical systems and installation method thereof " - D. De Fecondo - Nov. 2019). The "contact extraction boxes" indicated in IT102019000020717, are particularly suitable for use in the wiring according to the present invention as they are suitable for being installed and positioned with great flexibility on walls where a "ribbon cable" is laid. From a design point of view, in a more general sense, these "contact extraction boxes" are used in the context of new-concept electrical systems with "bus" architecture in which one or more power supply lines that carry voltage are arranged throughout the building (in principle both DC and AC), turning almost everywhere, and the loads are connected to these live lines at any point without interrupting them at the contact points, making available outside the wall, and therefore accessible to a load, an interface for electrical power supply.

These "contact extraction boxes" indicated in IT102019000020717 are characterized by the fact that, when installed, they are partially recessed in the wall, above the section of said power line where the contacts to be presented externally are to be extracted, and are recessed only for the thickness corresponding to that of the surface finishing panel, they are also equipped with at least one electrode positioned in such a way that when said "contact extraction boxes" are installed, this electrode is pressed on said "ribbon cable", so as to make electrical contact with a conductor of the power supply line.

Figure 2 represents a corner of a room, indicated with the number 200, which shows a piece of a network for the distribution of electrical power in a building according to the invention. The numbers whose first three digits make up the number 120 show some pieces of a "ribbon cable" laid on the walls of the room 200. The number 1201 indicates a piece of an upper ring, made up of two parallel "conductive tapes", and which must be imagined covering the entire perimeter of the room 200 near the ceiling. The number 1202 indicates a piece of a lower ring, which must be imagined to cover the entire perimeter of room 200, but being at a lower height. Said lower ring 1202 is composed of four parallel "conductive tapes". The wiring example shown in Figure 2 allows to illustrate a possible form of implementation of the present invention. The lower ring 1202, consisting of four conductors, can distribute, using a pair of conductors, AC power supply and, using the other pair of conductors, DC power supply

The numbers whose first three digits make up the number 140 indicate two "contact electrodes boards". The number 1402 indicates a "contact electrodes bord" included in the lower ring 1202. In said "contact electrodes board" 1402, in addition to the "contact electrode groups" needed to close the lower conducting ring 1202 , there are two other "groups of contact electrodes" which allow the electrical connection with two further cables. An upward wiring consisting of two "conductive tapes", and indicated with the number 1204, and a downward wiring, also composed of two "conductive tapes", and indicated with the number 1203.

By appropriately configuring the internal contacts to the "contact electrodes board" 1402, it is possible to connect the wiring upwards 1204 so that it carries continuous power to the upper ring 1201. And, once again thanks to the internal configurability of the "contact electrodes board" 1402, it is possible to connect the wiring 1203, oriented downwards, so that it carries AC power to the "contact extraction box" indicated with the number 1302.

Continuing to follow the configuration exemplified in Figure 2, we see that the wiring 1204 connects the "contact electrodes board" 1402 (included in the lower "conductor ring" 1202) with the "contact electrodes board" 1401 (included in the upper "conductive ring" 1201). By appropriately configuring the internal contacts of the "contact electrodes board" 1401, it is possible to make sure that the upper "conducting ring" 1201 distributes a DC power along the perimeter of the room 200 at a height close to the ceiling. Thanks to this distribution of DC power, it is therefore possible to extract electric contacts, at any point of the perimeter, using a "contact extraction box" like the one indicated in the example of Figure 2 with the number 1301. Said "contact extraction box "1301 can be used to power a LED light point, or an environmental sensor, or, more generally, a "smart object".

The example of Figure 2, while limiting itself to showing a wiring present in a corner of a generic room 200, shows how it is possible to make a wiring for the distribution of the electrical power supply, by laying a plurality of "conductor rings" made with "ribbon cables", on which are positioned some "contact electrodes boards" and cables that connect different "conductor rings". In general, in correspondence with said "contact electrodes boards", may depart wirings which, beside connecting other "conductive rings", can reach points where power is needed outside said "conductive rings".

The great flexibility of this type of wiring is given by the fact that the contacts to power a load can be extracted at any point of the "conductive rings" by means of appropriate "contact extraction boxes" which can be positioned at any point of said "conductive rings". Furthermore, if the power supply is necessary in a position that is not just above a "conductive ring", thanks to the exceptional ease of installation of the "ribbon cables" it is very simple to lie a short wiring that branch off from the nearest "contact electrodes board", as in the case exemplified in Figure 2, in which the wiring 1203 branches off from the "contact electrode board" 1402. For the sake of completeness, it is noted that a branch wiring can also originate from a "contact extraction box", positioned for the purpose, in the event that the closest "contact electrodes board" requires a branch wiring that is too long.

The representation of Figure 2 is obviously very simplified, compared to real cases, and it is proposed for the sole purpose of exemplifying the efficiency and flexibility of the electrical wiring carried out according to the teachings of the present invention. Not shown in the figure, but essential to effectively support future scenarios concerning the development of "intelligent buildings", it is the possibility of reaching all possible electrical loads, and also the "contact electrode cards", with appropriate data signals.

The need for data distribution, in particular for transmitting commands to "smart objects" (or to "contact electrodes boards"), derives from the fact that the wiring according to the invention does not provide for the insertion of switches on the power supply lines, which must always be live in all their points in order to guarantee, always and everywhere, the power supply when necessary. Consequently, the switching on and off or, more generally, the adjustment/configuration of the "smart objects" must be determined by means of commands that act directly on the load. Then, this apparent limitation, i.e., the impossibility of using line interruptions, is in fact easily overcome, since it is possible, and extremely easy, to deliver appropriate commands to all loads in many ways, of which at least three are reported here below.
1) Radio signals can be used. There are already various standards, designed and conceived precisely to support IoT (Internet of Things) scenarios, based on simple, reliable and also economic technologies.
2) Since these are control signals, they require an extremely low bit-rate, therefore no particular performance requirements are required for data transmission: consequently, it is possible to use the conductors of the electrical network (which is the main object of the present invention) also for the transmission of such data. In general, in fact, there is a vast offer of data transmission techniques on electrical power supply wirings and a vast literature on the subject. The so-called PLC (Power Line Communication) technologies are absolutely mature and reliable technologies, so much so that this mode of transmission does not constitute a technical problem at all, except for the fact that there is a too wide quantity of standards, so that eventual problems of compatibility could generate some difficulties in the selection of the various devices used in an "intelligent building".
3) There are "ribbon cables" that include, alongside the conductor cables, also cables dedicated to data, therefore, everything that is powered is also reached by a data connection on a dedicated cable. This solution appears to be the most interesting, and general, in perspective, because, in addition to being the safest, it can guarantee very high bit-rates capable of managing increasingly advanced applications (even unimaginable to date).

As understandable from what has already been illustrated above, the "contact electrodes boards" constitute an element of particular importance in the construction of systems according to the teachings of the present invention. Figure 3 shows a form of implementation of said "contact electrodes board" in which you can appreciate the thin size, the consequent ease of installation and the great versatility of use.

In the embodiment of Figure 3, said "contact electrodes board" is indicated as a whole with the number 140 and has a support of insulating material, indicated with the number 141, on which conductive tracks are placed on both faces . Typically, the tracks laid on the two faces of said support of insulating material are then covered with a thin layer of insulating protection. In Figure 3 we do not see the tracks that are in the face not in sight which must be imagined substantially similar to those visible in the figure.

These conductive tracks, one of which is indicated in Figure 3 with the number 142, have a conformation that predisposes them to be connected by contact with a "conductive tape" of a "ribbon cable ", when said "contact electrodes board" 140 is laid on the wall at the end of a "ribbon cable". On said "contact electrodes board" 140 there are also "configuration holes of the internal contacts", indicated with the number 143, which pass through said "contact electrodes board" and are positioned in points of the board such as to also cross two conductive tracks placed each on a different face of said "contact electrodes board". Said "configuration holes of the internal contacts" are arranged in such a way that special pins suitable for making an electrical contact with one of the two crossed tracks, or with both, can be inserted. By then connecting these pins together it is possible to make particular contacts between different tracks 142.

Said "configuration holes of the internal contacts" can also be used to connect electronic components to the tracks; these components can be suitably programmed to dynamically configure such "contact electrodes boards" 140, thus obtaining a network whose architecture is extremely flexible and configurable even remotely, without the need for physical intervention on the positioning of these plugs: one of these electronic components is indicated, in Figure 3, with the number 144. It should be noted that the "contact electrodes board" 140 in the embodiment presented in Figure 3 is only an example of an implementation form, which has the advantage of being thin, and therefore consistent with the principle of non-invasive installation of the wiring according to the present invention. Therefore, we do not focus on the topology of the tracks 142, nor on the positioning of the " configuration holes of the internal contacts " 143, as there are countless variants, suitable for coupling with the great variety of "ribbon cables" that can be installed to create a system according to the present invention.

### Concluding Remarks

Definitely, the structured cabling architecture of intelligent buildings according to the teachings of the present invention, compared to the traditional solutions proposed by the known art, appears to be very effective in supporting the evolutionary scenarios that are foreseeable for the living environments of the future, increasingly attentive to the comfort, air quality, safety, energy efficiency and, in general, to the "intelligent" management of the building.

In general, then, the present invention lends itself to numerous variations while maintaining the claimed prerogatives. In fact, it can be developed on a different scale and to wire environments with different intended uses.

Furthermore, the invention itself can be partially realized as well as the reciprocal position of the various described elements can be modified; moreover, each element can be developed in different materials, shapes or sizes and many of the described details can be replaced by technically equivalent elements.

In particular, the use of specific cables does not constitute an essential part of the present invention, even if, to date, the use of the so-called "ribbon cables" appears as the solution that best fits the implementation of the wiring according to the invention. However, it is a non-secondary advantage of the invention that it can also be implemented gradually, in environments where traditional wiring is already present, which can continue to be used; giving rise to hybrid wiring, which, however, still implement the essential concepts that characterize the invention. Furthermore, if in the future the materials sector were to make available new technologies of conductive materials, more advantageous than those mentioned in the preferred implementations, in order to implement the present invention more efficiently, further improvements could be made without changing the inventiveness and the principles that inspired the invention itself.

Other possible variants for the present invention could be linked to the evolution of electronic technologies in general (which are evolving towards an ever greater miniaturization and towards an ever lower power requirement), so that the structured cabling architecture of intelligent buildings according to teachings of the present invention could, for example, include the integration of sensors adapted to regulate the operation of the various subsystems that compose it according to increasingly optimized sequences. Moreover, components of varying complexity could be integrated and capable of performing other functions, additional to the mere distribution of the power supply.

Therefore, especially in the context of such evolutionary scenarios, the invention lends itself to incorporating and supporting further development and improvement efforts, capable of improving the performance of the system described. Therefore, many further developments can be made by the man skilled in the art without thereby departing from the scope of the invention as it results from this description and the attached claims which form an integral part of this description; or, if said developments are not included in the present description, they may be the subject-matter for further patent applications associated with the present invention, or dependent on it.

## Claims

1. A network for the distribution of electrical power in a building, which includes at least one conductive ring; and said conductive ring:
a. comprises a plurality of parallel conductive cables;
b. is accessible to provide power to a plurality of electrical devices connected in parallel, and said electrical devices are allowed to be positioned at any point of said conductive ring;
c. is associated to a data transmission line, suitable for supporting data exchanges with said electrical devices;
d. comprises at least one contact electrodes board (140), and
e. said contact electrodes board (140) has at least three groups of contact electrodes on its perimeter, and
f. at least two of said groups of contact electrodes comprise at least a number of electrodes equal to the number of parallel conductive cables comprised in said conductive ring, and said two groups of contact electrodes are designed to connect, each, with the ends of said parallel conductive cables, so as to close said conductive ring;
moreover, said at least one conductive ring is **characterized in that**:
g. said parallel conductive cables are comprised in at least one ribbon cable (120), which is made up, at least in part, of a plurality of conductive tapes (122) placed side by side, in the shape of a flat thin ribbon;
h. said contact electrodes board (140) is flat and thin, being formed also by a support (141) with electrical insulating properties on which there are tracks (142) of conductive material on both sides of said contact electrodes board (140), so as any couple of said tracks of conductive material that are on opposite sides of said contact electrodes board (140) is not in direct electrical contact, and
i. on said contact electrodes board (140), there are configuration holes for the internal contacts (143) arranged to insert contact plugs which pass across said contact electrodes board (140), in areas of the latter where two conductive material tracks (142) pass, one on each side said contact electrodes board (140), and
j. said contact plugs are suitable for making an electrical contact with one of the two crossed track or with both, and in this last case said contact plugs perform an indirect electrical contact between two conductive material tracks (142) that are on opposite sides of said "contact electrodes board" (140).

2. Network for the distribution of electrical power in a building according to claim 1, wherein said at least one conductive ring is associated with at least one contact extraction box suitable for being installed and uninstalled without interrupting the electrical continuity of said at least a conductive ring.

3. Network for the distribution of electrical power in a building according to claim 1, wherein said data transmission line, referred to in point "c.", is also realized with techniques of data transmission over the conductors of the power supply network.

4. Network for the distribution of electrical power in a building according to claim 1, wherein said data transmission line, referred to in point "c.", is also realized with cables dedicated to data transmission, flanked by said conductive tapes (122), which are comprised in said at least one ribbon cable (120).

## Patentansprüche

1. Ein Netzwerk zur Verteilung von elektrischer Energie in einem Gebäude, das mindestens einen leitenden Ring umfasst; und der leitende Ring:
a. besteht aus einer Vielzahl paralleler leitfähiger Kabel;
b. ist zugänglich, um eine Vielzahl parallel geschalteter elektrischer Geräte mit Strom zu versorgen, und die elektrischen Geräte können an jedem beliebigen Punkt des leitenden Rings positioniert werden;
c. ist mit einer Datenübertragungsleitung verbunden, die den Datenaustausch mit den genannten elektrischen Geräten unterstützt;
d. mindestens eine Kontaktelektrodenplatte (140) umfasst, und
e. die Kontaktelektrodenplatte (140) weist an ihrem Umfang mindestens drei Gruppen von Kontaktelektroden auf, und
f. mindestens zwei der Gruppen von Kontaktelektroden umfassen mindestens eine Anzahl von Elektroden, die der Anzahl der parallelen leitfähigen Kabel entspricht, die in dem leitfähigen Ring enthalten sind, und die beiden Gruppen von Kontaktelektroden sind so ausgelegt, dass sie jeweils mit den Enden der parallelen leitfähigen Kabel verbunden werden können, um den leitfähigen Ring zu schließen;
darüber hinaus ist der mindestens eine leitfähige Ring **dadurch gekennzeichnet, dass**:
g. die parallelen leitfähigen Kabel bestehen aus mindestens einem Flachbandkabel (120), das zumindest teilweise aus einer Vielzahl von leitfähigen Bändern (122) besteht, die nebeneinander in Form eines flachen, dünnen Bandes angeordnet sind;
h. die Kontaktelektrodenplatte (140) ist flach und dünn und besteht ebenfalls aus einem Träger (141) mit elektrisch isolierenden Eigenschaften, auf dem sich auf beiden Seiten der Kontaktelektrodenplatte (140) Bahnen (142) aus leitfähigem Material befinden, so dass jedes Paar der Bahnen aus leitfähigem Material, die sich auf gegenüberliegenden Seiten der Kontaktelektrodenplatte (140) befinden, nicht in direktem elektrischen Kontakt steht, und
i. Auf der Kontaktelektrodenplatte (140) befinden sich Konfigurationslöcher für die internen Kontakte (143), die so angeordnet sind, dass Kontaktstecker eingesetzt werden können, die über die Kontaktelektrodenplatte (140) verlaufen, und zwar in Bereichen der letzteren, wo zwei Leiterbahnen (142) aus leitfähigem Material verlaufen, eine auf jeder Seite der Kontaktelektrodenplatte (140), und
j. Die Kontaktstecker sind dazu geeignet, einen elektrischen Kontakt mit einer der zwei gekreuzten Leiterbahnen oder mit beiden herzustellen, und im letzteren Fall stellen die Kontaktstecker einen indirekten elektrischen Kontakt zwischen zwei Leiterbahnen (142) aus leitfähigem Material her, die sich auf gegenüberliegenden Seiten der "Kontaktelektrodenplatte" (140) befinden.

2. Netzwerk zur Verteilung von elektrischer Energie in einem Gebäude nach Anspruch 1, wobei der mindestens eine leitende Ring mit mindestens einer Kontaktextraktionsbox verbunden ist, die für die Installation und Deinstallation geeignet ist, ohne die elektrische Kontinuität des mindestens einen leitenden Rings zu unterbrechen.

3. Netzwerk zur Verteilung elektrischer Energie in einem Gebäude nach Anspruch 1, wobei die in Punkt "c." genannte Datenübertragungsleitung ebenfalls mit Techniken der Datenübertragung über die Leiter des Stromversorgungsnetzes realisiert ist.

4. Netzwerk zur Verteilung von elektrischer Energie in einem Gebäude nach Anspruch 1, wobei die in Punkt "c." genannte Datenübertragungsleitung ebenfalls mit Kabeln zur Datenübertragung ausgeführt ist, die von den leitfähigen Bändern (122) flankiert werden, die in dem mindestens einen Flachbandkabel (120) enthalten sind.

## Revendications

1. Réseau de distribution d'énergie électrique dans un bâtiment, qui comprend au moins un anneau conducteur ; et ledit anneau conducteur:
a. comprend une pluralité de câbles conducteurs parallèles;
b. est accessible pour alimenter une pluralité d'appareils électriques connectés en parallèle, et lesdits appareils électriques peuvent être positionnés en n'importe quel point dudit anneau conducteur;
c. est associé à une ligne de transmission de données, adaptée pour prendre en charge les échanges de données avec lesdits appareils électriques;
d. comprend au moins une carte d'électrodes de contact (140), et
e. ladite carte d'électrodes de contact (140) comporte au moins trois groupes d'électrodes de contact sur son périmètre, et
f. au moins deux desdits groupes d'électrodes de contact comprennent au moins un nombre d'électrodes égal au nombre de câbles conducteurs parallèles compris dans ledit anneau conducteur, et lesdits deux groupes d'électrodes de contact sont conçus pour se connecter, chacun, aux extrémités desdits câbles conducteurs parallèles, de manière à fermer ledit anneau conducteur ;
de plus, ledit au moins un anneau conducteur est **caractérisé en ce que**:
g. lesdits câbles conducteurs parallèles sont constitués d'au moins un câble plat (120), qui est constitué, au moins en partie, d'une pluralité de bandes conductrices (122) placées côte à côte, sous la forme d'un ruban mince et plat;
h. ladite carte d'électrodes de contact (140) est plate et mince, étant également formée par un support (141) ayant des propriétés d'isolation électrique sur lequel se trouvent des pistes (142) en matériau conducteur des deux côtés de ladite carte d'électrodes de contact (140), de manière à tout couple desdites pistes de matériau conducteur qui se trouvent sur les côtés opposés de ladite carte d'électrodes de contact (140) n'est pas en contact électrique direct, et
i. sur ladite carte d'électrodes de contact (140), il y a des trous de configuration pour les contacts internes (143) agencés pour insérer des fiches de contact qui traversent ladite carte d'électrodes de contact (140), dans les zones de cette dernière où passent deux pistes en matériau conducteur (142) , une de chaque côté de ladite carte d'électrodes de contact (140), et
j. lesdites fiches de contact sont adaptées pour établir un contact électrique avec l'une des deux pistes croisées ou avec les deux, et dans ce dernier cas lesdites fiches de contact réalisent un contact électrique indirect entre deux pistes en matériau conducteur (142) qui se trouvent sur des côtés opposés de ladite " carte d'électrodes de contact" (140).

2. Réseau de distribution d'énergie électrique dans un bâtiment selon la revendication 1, dans lequel ledit au moins un anneau conducteur est associé à au moins un boîtier d'extraction de contacts apte à être installé et désinstallé sans interrompre la continuité électrique dudit au moins un anneau conducteur.

3. Réseau de distribution d'énergie électrique dans un bâtiment selon la revendication 1, dans lequel ladite ligne de transmission de données, mentionnée au point "c.", est également réalisée avec des techniques de transmission de données sur les conducteurs du réseau d'alimentation électrique.

4. Réseau de distribution d'énergie électrique dans un bâtiment selon la revendication 1, dans lequel ladite ligne de transmission de données, mentionnée au point "c.", est également réalisée avec des câbles dédiés à la transmission de données, flanqués desdites bandes conductrices (122), qui sont compris dans ledit au moins un câble plat (120).
